# EUROPÄISCHE PATENTANMELDUNG

(11) **EP 1 900 494 A1**
(43) Veröffentlichungstag der Anmeldung: **19.03.2008**
(21) Anmeldenummer: 07017343.0
(22) Anmeldetag: 05.09.2007
(51) Int. Cl.: B29C 43/02, B29C 43/16

(54) **Verfahren zur Herstellung von stabförmigen Bauteilen**

(30) Priorität: 18.09.2006 DE 102006045736
(71) Anmelder: Ensinger GmbH, 71154 Nufringen (DE)
(72) Erfinder: Eisenhardt, Dieter, 75365 Calw (DE); Hoffmann, Stephanie, 72827 Wannweil (DE)
(74) Vertreter: Hoeger, Stellrecht & Partner Patentanwälte

(57) **Zusammenfassung**

Um ein Verfahren zur Verfügung zu stellen, mit dem stabförmige Bauteile (10) mit einem oder mehreren funktionellen Elementen (24,34,44) aus einem thermoplastischen Kunststoffmaterial gefertigt werden können, wobei die Länge der stabförmigen Bauteile beliebig variiert werden kann, wird vorgeschlagen, dass das Verfahren das Herstellen eines Rohlings im Extrusionsverfahren mit Abmessungen umfasst, die im Wesentlichen dem stabförmigen Bauteil entsprechen, und Umformen eines Abschnitts des Rohlings zum Erzeugen einer vorgegebenen Querschnittsänderung unter Materialanhäufung in diesem Abschnitt zum Bauteil mit funktionellem Element, wobei der Abschnitt vor oder beim Umformen auf eine Umformtemperatur erwärmt wird, welche zwischen dem Glasumwandlungspunkt und dem Schmelzpunkt oder Erweichungspunkt des Kunststoffmaterials liegt.

## Beschreibung

Die Erfindung betrifft ein Verfahren zur Herstellung von stabförmigen Bauteilen aus einem thermoplastischen Kunststoffmaterial.

Stabförmige Bauteile aus thermoplastischem Kunststoffmaterial finden in einer Vielzahl von Anwendungen Verwendung, insbesondere als Gelenkbolzen und dergleichen, wobei die stabförmigen Bauteile funktionelle Elemente, die eine Materialanhäufung erfordern, beispielsweise einen an ihrem freien Enden angeformten Kopf aufweisen und/oder Rastvorsprünge im Bereich zwischen ihren Enden.

Herkömmlicherweise werden solche stabförmigen Bauteile mit funktionellen Elementen im Spritzgussverfahren hergestellt, wobei allerdings bei einer Änderung der Stablänge ein neues sehr teures Werkzeug gefertigt werden muss, und so die Umstellung auf die Produktion einer anderen Länge nicht nur kostenaufwändig ist, sondern auch einen erheblichen Zeitbedarf verlangt.

Ab einer bestimmten Länge des stabförmigen Bauteils, insbesondere bei Längen größer 1 m, kommt das Spritzgussverfahren an seine Grenzen und die Materialqualität des Spritzgussteiles leidet.

Darüber hinaus weisen alle spritzgegossenen Teile Nahtstellen auf, die auf das notwendigerweise geteilte Werkzeug zurückzuführen sind, und die insbesondere bei der Verwendung der stabförmigen Bauteile als Gelenkbolzen nachteilig sind, weil hier die gewünschte perfekte zylindrische Geometrie nicht erreicht wird.

Aufgabe der vorliegenden Erfindung ist es, ein Verfahren zur Verfügung zu stellen, mit dem stabförmige Bauteile mit einem oder mehreren funktionellen Elementen aus einem thermoplastischen Kunststoffmaterial gefertigt werden können, wobei die Länge der stabförmigen Bauteile beliebig variiert werden kann.

Diese Aufgabe wird bei einem Verfahren der eingangs beschriebenen Art erfindungsgemäß dadurch gelöst, dass zunächst ein stabförmiger Rohling im Extrusionsverfahren mit Abmessungen, die im Wesentlichen dem stabförmigen Bauteil entsprechend hergestellt wird und der Rohling danach mittels Umformen eines Abschnitts unter Materialanhäufung zum Bauteil mit einem funktionellen Element ausgebildet wird. Dabei wird der Abschnitt vor oder beim Umformen auf eine Umformtemperatur erwärmt, welche zwischen dem Glasumwandlungspunkt und dem Schmelzpunkt bzw. Erweichungspunkt des Kunststoffmaterials gewählt wird.

Mit dem erfindungsgemäßen Verfahren lassen sich ein oder mehrere vorgegebene Abschnitte des Rohlings umformen, d.h. mit einem oder mehreren funktionellen Elementen versehen, ohne dass die Qualität des thermoplastischen Kunststoffmaterials dabei beeinträchtigt wird.

Bei der Umformung kann beispielsweise ein Kopf am freien Ende des Rohlings gebildet werden und/oder in beliebigem Abstand von den Enden des Rohlings Vorsprünge, Noppen oder umlaufende Ringbünde. Die Querschnittsveränderungen, die unter Materialanhäufung am Rohling erzeugt werden, können auch in Axialrichtung gesehen Hinterschneidungen aufweisen, sodass solche Bauteile sehr gut in Rastverbindungen eingesetzt werden können.

Ein großer Vorteil des erfindungsgemäßen Verfahrens besteht darin, dass der Rohling zunächst in einem Extrusionsverfahren vollkommen gratfrei erhalten werden kann und dass bei der nachfolgenden Umformung rissfreie eine Querschnittsveränderung unter Materialanhäufung erzielt wird, ohne dass dabei eine thermische Degradation oder auch nur eine oberflächliche Oxidation des thermoplastischen Kunststoffmaterials zu befürchten ist. Ferner werden die mechanischen Werte des Kunststoffmaterials nicht beeinträchtigt.

Die mechanischen Eigenschaften des Kunststoffmaterials sind so auch in den von der Umformung betroffenen Abschnitten, d.h. in den gebildeten funktionellen Elementen genau vorgebbar.

Die erforderlichen Werkzeugkosten beim erfindungsgemäßen Verfahren sind um ein Vielfaches günstiger als die beim Spritzguss aufzuwendenden Werkzeugkosten und insbesondere lassen sich stabförmige Bauteile mit einer beliebigen Länge in gleichbleibender Qualität herstellen.

Die Rohlinge werden bevorzugt von einem extrudierten Endlosmaterial abgelängt und danach dem Umformvorgang unterworfen.

Bevorzugt liegt die Umformtemperatur um mindestens 20 °C oberhalb der Glasumwandlungstemperatur des thermoplastischen Kunststoffmaterials. Weiter bevorzugt wird ein Abstand von 35 °C zur Glasumwandlungstemperatur eingehalten, wodurch die für die Umformung notwendigen Verformungskräfte weiter reduziert werden können.

Bei der erfindungsgemäßen Umformung wird die Materialanhäufung bei einem sozusagen "kalten Fließen" des Kunststoffmaterials erzeugt, wobei sehr kurze Haltezeiten im Werkzeug möglich sind.

Dies erlaubt sehr hohe Taktraten in der Produktion, was ein weiterer Vorteil des erfindungsgemäßen Verfahrens darstellt.

Aufgrund der verhältnismäßig niedrigen Temperaturen, die für die Umformungstemperatur benötigt werden, sind auch die Energiekosten des erfindungsgemäßen Verfahrens gering.

Bei thermoplastischen Kunststoffmaterialien mit einem Glasumwandlungspunkt oberhalb Raumtemperatur wird die Umformungstemperatur bevorzugt in einem Bereich von ca. 35 bis ca. 70 °C oberhalb der Glasumwandlungstemperatur liegen.

Dies sichert einerseits die Möglichkeit der Umformung ohne den Aufwand allzu großer Kräfte um die Materialanhäufung und Querschnittsveränderung, d.h. die Ausbildung der funktionellen Elemente, zu erzwingen, andererseits hält man mit einer Umformtemperatur in diesem Bereich einen sehr großen Abstand zu der Schmelztemperatur aller gängiger und sich insbesondere auch für das vorliegende Verfahren als thermoplastische Kunststoffmaterialien anbietenden Materialien.

Insbesondere ist es bevorzugt, wenn die Umformtemperatur mindestens 100 °C unterhalb der Schmelztemperatur liegt, was bei den kurzen, gemäß dem erfindungsgemäßen Verfahren notwendigen Haltezeiten eine Garantie für eine minimale thermische Belastung für das thermoplastische Kunststoffmaterial gibt.

Erfindungsgemäß wird der Rohling für den Umformschritt in einem Bereich benachbart zum umzuformenden Abschnitt des Rohlings in einem Werkzeug im Wesentlichen formänderungsfrei fixiert, während der umzuformende Abschnitt der Umformung unterzogen wird.

Die Umformung geschieht insbesondere in Form eines Senkschrittes, wie er von der Metallverarbeitung analog bekannt ist.

Bei dem Senkschritt wird bevorzugt eine Stauchung des umzuformenden Abschnitts parallel zur Längsrichtung des Rohlings durchgeführt.

Bevorzugt wird zur Fixierung des Rohlings benachbart zu dem umzuformenden Abschnitt ein Backenfutter verwendet, insbesondere ein Dreibackenfutter, welches gleichzeitig der Zentrierung des Rohlings im Werkzeug dient. Wie bereits zuvor erwähnt, kann der umzuformende Abschnitt ein freies Ende des Rohlings bzw. stabförmigen Bauteils umfassen, wobei die Umformung nicht nur an einem Abschnitt, sondern an mehreren Abschnitten des Rohlings erfolgen kann.

Dabei kann auch der umzuformende Abschnitt von beiden Enden des Rohlings beabstandet sein.

Bevorzugt wird für die Umformung ein formgebendes Werkzeug verwendet, sodass die Materialanhäufung gezielt die erwünschte Form des funktionellen Elements des fertigen Bauteiles ergibt.

Als formgebendes Werkzeug eignet sich beispielsweise ein Gesenk.

Ergänzend oder alternativ hierzu können auch formgebende Werkzeuge verwendet werden, die zur Entformung teilbar sind, sodass insbesondere Materialanhäufungen von den freien Enden beabstandet erzeugbar sind.

Aufgrund der Tatsache, dass bei dem erfindungsgemäßen Verfahren mit Umformtemperaturen gearbeitet werden kann, die weit unterhalb der Schmelzoder Erweichungstemperatur des Kunststoffmaterials liegt, vermeidet man bei dem Umformschritt die Bildung von Graten, auch wenn hierbei teilbare Werkzeuge zum Einsatz kommen.

Wie bereits erwähnt sind die Haltezeiten der Rohlinge in dem vorliegenden Werkzeug bei dem erfindungsgemäßen Verfahren gering. Unter einer geringen Haltezeit werden Haltezeiten unterhalb von 15 min verstanden, die in vielen Fällen wesentlich kleiner sein können, beispielsweise 10 sec, und bereits ausreichen, um die Umformung bzw. die Materialanhäufung unumkehrbar zu machen.

In vielen Fällen reichen Haltezeiten im Bereich von 30 sec bis 5 min aus.

Die Aufheizung des Abschnitts des Rohlings bei der Umformung auf die Umformtemperatur kann in verschiedener Art und Weise bewerkstelligt werden. Zum einen ist es möglich, diesen Abschnitt vor dem Einbringen des Rohlings in das Umformwerkzeug auf die Umformtemperatur zu bringen. Das Umformwerkzeug kann dabei beheizt oder unbeheizt sein.

Einfacher ist es allerdings, den Abschnitt in dem formgebenden Werkzeug auf die Umformtemperatur zu heizen.

Weiter bevorzugt wird der Abschnitt während der Haltezeit auf der Umformtemperatur gehalten.

Noch weiter bevorzugt, da mit weniger Regelungsaufwand verbunden, wird das Werkzeug konstant auf der Umformungstemperatur gehalten, und überträgt beim Einsetzen des Rohlings und nachfolgend zu dessen Fixierung die gespeicherte Wärme auf den Kunststoffrohling.

Aufgrund der niedrigen Umformungstemperaturen des erfindungsgemäßen Verfahrens kann das Abkühlen der Form bzw. des umgeformten Rohlings entfallen. Die Entformungstemperaturen bei Spritzgießverfahren mit vergleichbaren Materialien liegen im Bereich der erfindungsgemäß verwendeten Umformungstemperaturen.

Gemäß einer Variante des erfindungsgemäßen Verfahrens kann ein Teil des Werkzeugs zum Fixieren des Rohlings beheizt werden und somit einen Abschnitt bilden, in dem ein gegebenenfalls weiterer Umformvorgang, d.h. ein "kaltes Fließen" des Kunststoffmaterials mit einer Materialanhäufung in der Folge möglich wird.

Wie bereits zuvor angesprochen, wird vorzugsweise so vorgegangen, dass ein endlos gefertigtes stabförmiges Material gefertigt wird, von dem dann der Rohling entsprechend der geforderten Länge für das stabförmige Bauteile abgelängt wird.

Damit lassen sich die stabförmigen Materialien als Endlosmaterial im Vorrat produzieren, wobei dann nach Bedarf von dem Endlosvorrat Rohlinge abgelängt und in einem Umformschritt zum fertigen stabförmigen Bauteil verarbeitet werden.

Der Querschnitt der stabförmigen Bauteile ist prinzipiell ohne Beschränkung, d.h. es können beliebige Querschnitte bei den stabförmigen Materialien quer zur Längsrichtung realisiert werden.

Häufig jedoch sind symmetrische Geometrien gefordert, insbesondere zylindrische Geometrien wie z.B. bei Gelenkbolzen.

Die Erfindung betrifft des Weiteren Bauteile aus einem thermoplatischen Kunststoff, umfassend einen stabförmigen extrudierten Grundkörper, mit einem im Wesentlichen konstanten Querschnitt und mindestens einem im Querschnitt, durch Materialanhäufung gebildeten abweichenden Abschnitt.

Die durch Materialanhäufung gebildete Abweichung im Querschnitt kann sehr vielfältige Formen aufweisen, beispielsweise eine Kugelkalottenform am Ende eines Bauteils, oder aber beispielsweise die Form eines Ringbundes beabstandet von einem Ende des Bauteils annehmen. So kann die Form des funktionellen Elements an dessen Aufgabe angepasst werden.

In gleicher Weise können um den Außenumfang des Bauteils herum Vorsprünge als funktionelle Elemente ausgebildet werden, insbesondere auch ringsum laufende Vorsprünge, und bei diesen Vorsprüngen, ebenso wie bei den Kugelkalottenformen am Ende eines Bauteils, könne Hinterschneidungen realisiert werden.

Die erfindungsgemäßen Bauteile eignen sich insbesondere zum Einsatz als Gelenkbolzen, wobei eines der bevorzugten Anwendungsgebiete die Verwendung in Kettenbändern betrifft, die in großem Umfang bei industriellen Transportprozessen zum Einsatz gelangen. Die Bandbreiten der Kettenbänder sind zum Teil erheblich und übersteigen vielfach die Breite von 1 m. Die geforderte Länge der Gewindebolzen ist hier von der Breite der Kettenbänder vorgegeben, da ein Gewindebolzen möglichst die Gewindeverbindung über die gesamte Breite des Bandes herstellen soll, um Schwachstellen im Band zu vermeiden.

Mit besonders großem Vorteil lassen sich die erfindungsgemäßen stabförmigen Bauteile der vorliegenden Erfindung bei Kettenbändern einsetzen, die für den Bereich der Lebensmittelproduktion zum Einsatz gelangen, z.B. bei Gefrieroder Backstraßen. Durch das schonende Verfahren bei der Umformung bleiben die mechanischen sowie chemischen Eigenschaften der thermoplastischen Kunststoffe unangetastet, sodass ein einmal für diesen Bereich zugelassenes Kunststoffmaterial keiner erneuten Prüfung unterzogen werden muss, und bedenkenlos in der Produktion von Lebensmitteln zum Einsatz kommen kann.

Obwohl die stabförmigen Bauteile der vorliegenden Erfindung in der Regel aus einem Vollmaterial bestehen, ist es selbstverständlich vorstellbar, dass in speziellen Ausgestaltungen stabförmige Bauteile verwendet werden, die beispielsweise einen innen liegenden Längskanal aufweisen.

Zur Durchführung des erfindungsgemäßen Verfahrens wird vorzugsweise ein Werkzeug eingesetzt, welches zum einen ein Fixierwerkzeug zum Halten des Bauteils in einem Bereich benachbart zu dem umzuformenden Abschnitt umfasst, und des Weiteren ein Umformwerkzeug selbst. Das Umformwerkzeug ist relativ beweglich gegenüber dem Fixierwerkzeug gehalten und vorzugsweise mit einer Heizvorrichtung versehen.

Das Fixierwerkzeug wird vorzugsweise als ein Dreibacken- oder Vierbackenfutter ausgeführt, welches neben der Fixierung auch gleichzeitig eine Zentrierung des umzuformenden Rohlings vornehmen kann.

Die Backen des Fixierwerkzeuges können in Axialrichtung des Rohlings gesehen geteilt sein, wobei ein Teil der Backen dabei beheizt werden kann.

Bevorzugt wird das Umformwerkzeug ebenfalls durch die Backen des Fixierwerkzeuges zentriert, sodass eine sehr präzise Ausbildung des veränderten Querschnitts am stabförmigen Bauteil vorgenommen werden kann, ohne dass aufwendige Justiermaßnahmen am Werkzeug notwendig sind.

Beispielsweise können die Backen in einer Radialrichtung auf den stabförmigen Rohling hin und von diesem weg bewegt werden, wobei Teile der Backen eine Führung für ein zylindrisches Bauteil bilden und dieses ebenfalls zentrieren, indem das Umformwerkzeug relativ verschieblich gegenüber dem Fixierwerkzeug gehalten ist.

Während mit dem Dreibackenfutter bereits eine ausreichende Zentrierung des Rohlings im Werkzeug gelingt, hat das Vierbackenfutter den Vorteil, dass dieses geometrisch neutral bei einer Wärmedehnung reagiert.

Diese und weitere Vorteile der Erfindung werden im Folgenden anhand der Zeichnung noch näher erläutert. Es zeigen im Einzelnen:
- Figur 1:: Eine perspektivische Darstellung eines erfindungsgemäßen Bauteils;
- Figur 2:: eine Schnittansicht Längslinie II-II in Figur 1;
- Figur 3:: eine Schnittansicht durch ein weiteres erfindungsgemäßes Bauteil;
- Figur 4:: eine Schnittansicht durch ein weiteres erfindungsgemäßes Bauteil;
- Figur 5:: eine perspektivische Darstellung eines Teiles eines erfindungsgemäßen Bauteils;
- Figur 6:: ein Kettenband mit einem Gelenkbolzen in Form eines erfindungsgemäßen Bauteils;
- Figur 7:: erfindungsgemäßes Werkzeug zur Durchführung des erfindungsgemäßen Herstellungsverfahrens; und
- Figur 8:: Detail und Variante eines erfindungsgemäßen Werkzeuges gemäß Figur 7.

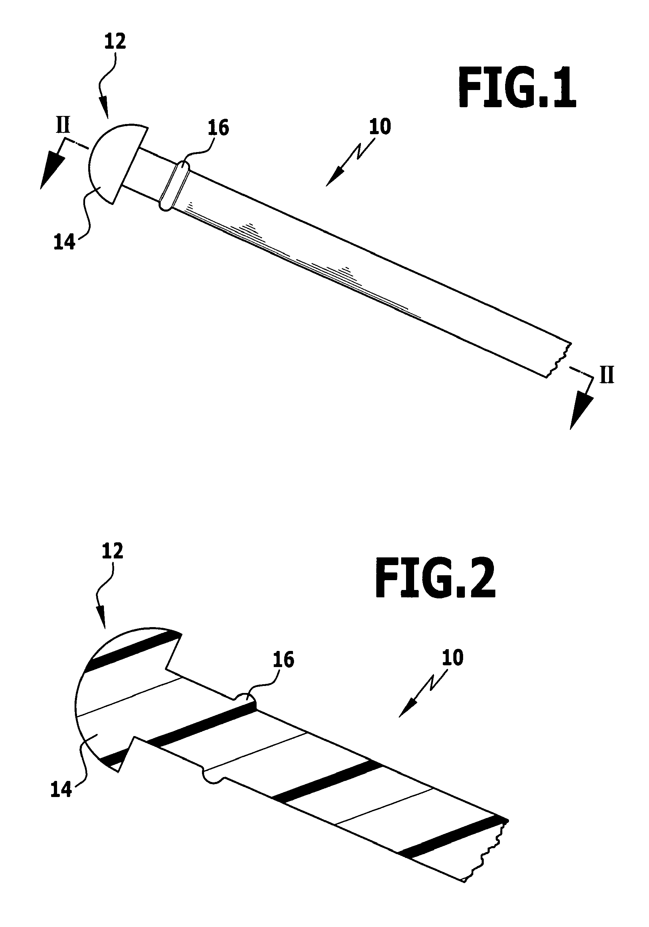

Figur 1 zeigt ein insgesamt mit dem Bezugszeichen 10 versehenes erfindungsgemäßes stabförmiges Bauteil in Form eines Gelenkbolzens mit einer im Wesentlichen zylindrischen Gestalt. An einem freien Ende 12 weist der Gelenkbolzen 10 einen kugelkalottenförmigen Kopf 14 auf, der durch Umformen eines zylindrischen Rohlings gemäß dem erfindungsgemäßen Verfahren gebildet wurde. Der Durchmesser des zylindrischen Rohlings beträgt in diesem Beispiel 3 mm.

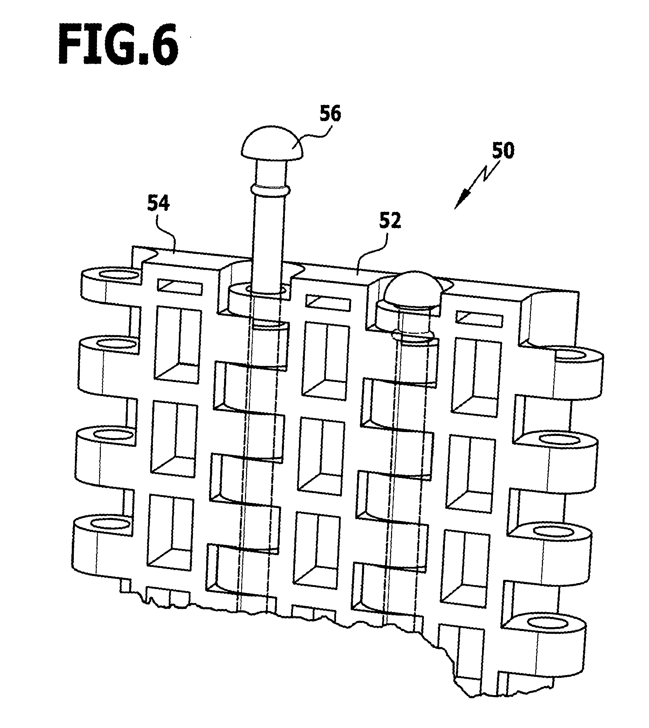

In einem Abstand vom Kopf 14 ist an dem Gelenkbolzen 10 noch eine Ringbund 16 ausgebildet, die einer Verrastung des Gelenkbolzens beim Einschieben in eine zugehörige Gelenkverbindung (vgl. Figur 6) dient.

Im vorliegenden Fall ist der Gelenkbolzen aus einem Polyamid 6.6-Material gebildet, welches einen Schmelzpunkt von ca. 260 °C ± 5 °C aufweist. Der Glasübergangspunkt bei diesem Material liegt üblicherweise bei ca. 72 °C bis 50 °C, je nach Feuchtegehalt des verwendeten Materials.

Die ideale Arbeitstemperatur für den Umformprozess liegt hier oberhalb von 110 °C, insbesondere im Bereich 120 bis 140 °C, in dem sich der Umformschritt ohne allzu großen Kraftaufwand bewerkstelligen lässt.

Polyamid 6.6 zeigt einen thermischen, oxidativen Abbau erst bei extremer Langzeitbelastung bei Temperaturen oberhalb von 140 °C, wobei unter Langzeitbelastung eine Belastung von mehreren Tagen zu verstehen ist.

Da die Haltezeit des Rohlings beim und nach dem Umformprozess auf ca. 30 sec oder sogar noch weniger beschränkt werden kann (in Abhängigkeit von dem Durchmesser des Gelenkbolzens 10) wird deutlich, dass die Umformbedingungen gemäß dem erfindungsgemäßen Verfahren sehr weit von Bedingungen entfernt liegen, bei denen üblicherweise thermische und oxidative Abbaureaktionen bei dem Kunststoffmaterial PA 6.6 beobachtet werden. Erst bei Temperaturen von 220 °C werden thermische und oxidative Abbaureaktionen bei Haltezeiten beobachtet, die größer 1 h liegen.

Der Kraftaufwand für die beschriebene Umformung und Bildung der Funktionselemente 14 und 16 liegt bei einem Rohling mit einem Durchmesser von 3 mm ungefähr bei ca. 40 bis 200 MPa.

Selbstverständlich lassen sich für die Herstellung des Gelenkbolzens 10 sehr viele verschiedene Kunststoffmaterialien einsetzen, insbesondere auch solche, bei denen der Glasübergangspunkt weitaus niedriger liegt als bei dem zuvor besprochenen PA 6.6.

Beispielsweise eignen sich Materialien wie PA 11 und PA 12. PA 11 weist eine Glasübergangstemperatur von ca. 43 °C und einen Schmelzpunkt von ca. 183 °C auf. PA 12 hat eine Glasübergangstemperatur von ca. 45 °C und einen Schmelzpunkt von ca. 175 °C. Die Verarbeitungstemperaturen in herkömmlichen Verfahren, bei denen die Polymere aufgeschmolzen werden, liegen bei ca. 190 bis 210 °C für beide PA-Polymere.

Ein weiteres Material, das die Bandbreite an Materialien, die mit dem erfindungsgemäßen Verfahren verarbeitet werden können, demonstriert, ist das Polyoxymethylen (POM), welches einen Schmelzpunkt von ca. 200 °C aufweist, bei einem Glasübergangspunkt der deutlich unter 0 °C liegt, nämlich bei ca. -60 °C.

Bei einem solchen Material wird durch das Erwärmen des umzuformendes Abschnitts des Rohlings auf eine Temperatur oberhalb Raumtemperatur derjenige Teilbereich oder Abschnitt des Rohlings bestimmt, an dem die Umformung bzw. die Bildung des funktionellen Elements erfolgt. Im Prinzip könnte natürlich hier die Umformung ohne eine Erwärmung auf eine Temperatur oberhalb von Raumtemperatur erfolgen, jedoch besteht dann das Problem, dass auch im Fixierwerkzeug unter Umständen eine Formveränderung am Rohling vorkommt und dieser seine im vorliegenden Fall zuvor gegebenen perfekte zylindrische Form einbüßt.

Erwärmt man dagegen solche Materialien mit sehr niedrigen Glasübergangspunkten im umzuformenden Bereich auf eine Temperatur deutlich oberhalb von Raumtemperatur, beispielsweise auf eine Temperatur von 50 °C, dann lässt sich der Umformvorgang sehr genau auf den erwärmten Abschnitt des Rohlings beschränken.

Typische Durchmesser der stabförmigen erfindungsgemäßen Bauteile liegen im Bereich von 2 mm bis 10 mm.

Figur 2 ist eine Schnittdarstellung des Gewindebolzens 10 der Figur 1 gegeben, wobei hier darauf hingewiesen werden darf, dass der Abstand des Ringbundes 16 von dem Kopf 14 im vorliegenden Fall relativ kurz ist, sodass beide Querschnittsveränderungen in einem Umformschritt vorgenommen werden können.

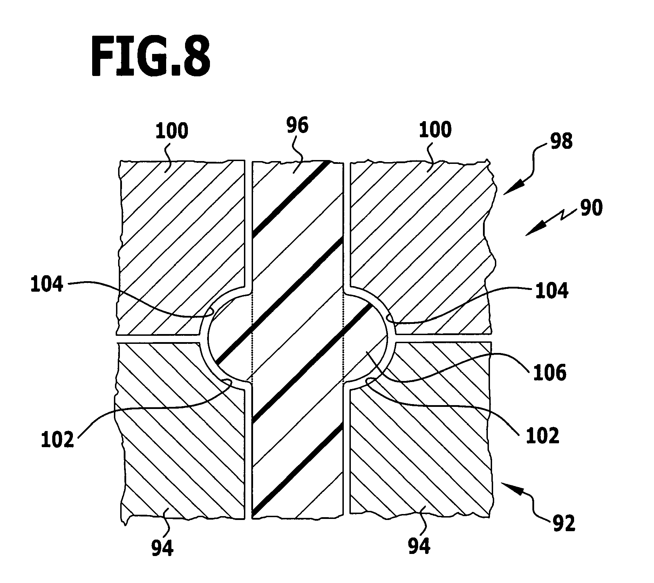

Wird ein Ringbund als weiteres funktionelles Element an einer weiter vom Kopf 14 entfernten Stelle gewünscht, kann auch dies erfindungsgemäß realisiert werden, wobei dies dann bevorzugt in einem separaten Umformschritt vorgenommen wird. Hierauf soll weiter unten im Rahmen der Beschreibung der Figur 8 noch näher eingegangen werden.

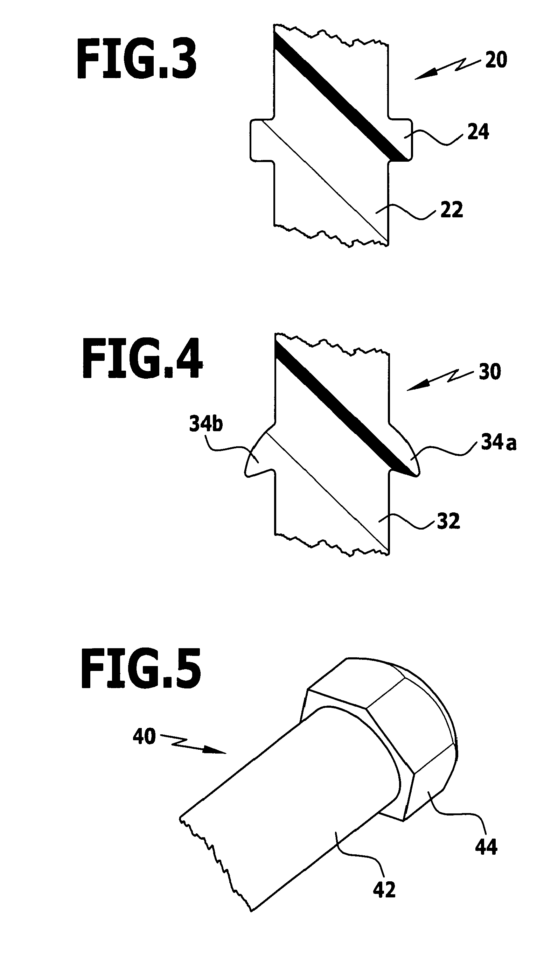

Figur 3 zeigt ausschnittsweise ein erfindungsgemäßes Bauteil 20 mit einem zylindrischen Grundkörper 22, an dem ein Ringbund 24 als funktionelles Element mit rechteckigem Querschnitt angeformt ist.

Figur 4 zeigt ein erfindungsgemäßes Bauteil 30 mit einem im Wesentlichen zylindrischen Grundkörper 32 und an diesen angeformten leicht hinterschnittenen Vorsprüngen 34 als funktionelles Element.

Figur 5 zeigt eine weitere Variante eines erfindungsgemäßen Bauteils 40 mit einem zylindrischen Grundkörper 42 und einen am freien Ende des Bauteils 40 angeformten Sechskant 44 als funktionelles Element.

Figur 6 zeigt im Ausschnitt ein Kettenband 50, wie dieses in industriellen Lebensmittelerzeugungsverfahren zum Einsatz kommt. Hier werden einzelne Kettenglieder 52, 54 mittels eines Gelenkbolzens 56 gelenkig verbunden. Je nach Breite des Kettenbandes wird von dem Gelenkbolzen 56 eine entsprechende Länge benötigt, sodass dieser das gesamte Kettenband in seiner Breite durchsetzt. Über die funktionellen Elemente des Gelenkbolzens 56 wird eine exakte Positionierung und eine Fixierung in dessen Axialrichtung den Kettengliedern gegenüber erzielt.

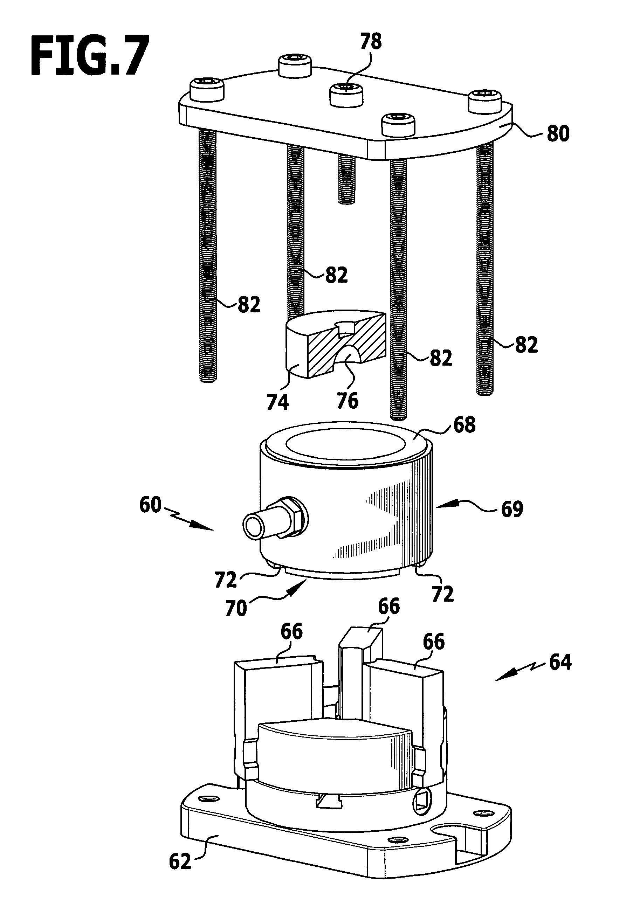

Die Figur 7 zeigt eine insgesamt mit dem Bezugszeichen 60 versehene Vorrichtung, die zur Durchführung des erfindungsgemäßen Verfahrens dient, und die selbst Teil der vorliegenden Erfindung ist.

Die Vorrichtung umfasst ein auf einer Basisplatte 62 montiertes Dreibackenfutter 64, welches mittig eine durchgehende Bohrung aufweist (nicht gezeigt), in welche ein stabförmiger Rohling zur Herstellung eines erfindungsgemäßen stabförmigen Bauteils aufgenommen werden kann.

Das Dreibackenfutter 64 weist drei radial verfahrbare Backen 66 auf, welche synchron in Radialrichtung nach innen bzw. nach außen verfahren werden können.

Im zusammengebauten Zustand stützt sich auf den drei Backen 66 des Dreibackenfutters 64 ein Führungsring 68 ab, der an seiner den Backen 66 zugewandten Stirnseite 70 drei Nuten 72 aufweist, in die die Backen 66 gleitend eingreifen.

Dadurch wird eine Zentrierung des Führungsrings 68 zur Mitte der von dem Dreibackenfutter definierten Position für den fixierten Rohling vorgegeben.

In dem Führungsring 68 ist axial verschieblich eine Gesenkplatte 74 gehalten, die eine zentrale Ausnehmung 76 aufweist, die als Negativform für die Bildung eines kugelkalottenförmigen Kopfes an dem zu bearbeitenden Rohling fungiert.

Sobald der Rohling in das Dreibackenfutter eingeführt ist und von diesem zentriert gespannt wird, kann dieser im Abschnitt der von dem Führungsring 68, der einen Teil des Umformwerkzeuges darstellt, beheizt werden (Heizband 69) und sobald der Rohling in diesem Abschnitt die Umformtemperatur erreicht hat, wird dann die Gesenkplatte 74 in Axialrichtung gegen das Backenfutter 64 verfahren, in dem hier gezeigten Beispiel mit Hilfe einer Vorschubschraube 78, die von einer Montageplatte 80 in einem Gewinde aufgenommen wird. Die Montageplatte 80 wird über Zuganker 82 mit der Basisplatte 62 verbunden, sodass die von der Vorschubschraube 78 ausgeübte Kraft zu einer Stauchung des auf Umformtemperatur gebrachten Abschnitts des Rohlings führt.

Sind in dem oberen Bereich der Backen 66 Vertiefungen (vgl. Beschreibung der Figur 8) eingelassen, dann lässt sich zusätzlich zu dem Kopfelement auch gleichzeitig noch beispielsweise ein Ringbund an dem Rohling anformen, ähnlich wie dies in der Ausführungsform der Figur 1 gezeigt ist.

Beim Entformen wird zunächst der Druck der Vorschubschraube 78 weggenommen und das Backenfutter geöffnet, wobei dann das fertige Bauteil der Vorrichtung entnommen werden kann.

Wie sich aus der Zeichnung der Figur 7 und der vorhergehenden Beschreibung leicht ergibt, kann das erfindungsgemäße Werkzeug sehr kompakt und mit geringem Gewicht hergestellt werden, sodass dieses beispielsweise einem Servicemitarbeiter, der die Kettenbänder, die bei Kunden im Betrieb im Einsatz sind, zu betreuen hat, mitgegeben werden kann, und der dann an Ort und Stelle den notwendigen Ersatz an Gelenkbolzen eventuell von einem Endlosmaterial ablängt und die entsprechenden funktionellen Elemente mit dem soeben beschriebenen erfindungsgemäßen Werkzeug an dem Rohling anformt.

Das erfindungsgemäße Verfahren sowie das erfindungsgemäße Werkzeug erlauben im Zweifel auch Notreparaturen, wo beispielsweise bei einem Bruch eines Gelenkbolzens nur ein Teil dessen ersetzt werden muss, der dann von der entgegengesetzten Richtung wie der noch funktionsfähige Rest in das Gelenk des Kettenbandes eingeschoben und fixiert werden kann.

Bei der Beschreibung des vorhergehenden Werkzeuges wurde ein Backenfutter verwendet, um den Rohling in der Vorrichtung zu fixieren und um dann mit einem Umformwerkzeug in Form eines Gesenks die Materialanhäufung in dem umzuformenden Abschnitt zu erzwingen unter Ausbildung der gewünschten funktionellen Elemente.

Dies gelingt in der vorstehend beschriebenen Weise an den freien Enden des Rohlings. Soll jedoch ein funktionelles Element beabstandet von den Enden des Rohlings hergestellt werden, empfiehlt sich eine Modifikation des Umformwerkzeuges wie dies schematisch in Figur 8 dargestellt ist.

Die Vorrichtung in Figur 8, die mit dem Bezugszeichen 90 versehen ist, ist im Wesentlich aufgebaut wie die im Zusammenhang mit Figur 7 beschriebene Vorrichtung. Diese weist zunächst ein Dreibackenfutter 92 mit Backen 94 auf, die in Fixierstellung einen Rohling 96 zentrisch in der Vorrichtung halten.

Das Umformungswerkzeug ist hier anderes als bei der Vorrichtung gemäß Figur 7 ebenfalls ein Backenfutter 98 mit Backen 100, welche den aus dem Backenfutter 92 überstehenden Teil des Rohlings 96 zentrisch aufnehmen und ebenfalls fixieren. Der Rohling 96 wird im Bereich zwischen den beiden Backenfuttern 92 und 98 auf Umformtemperatur gebracht und danach werden die beiden Backenfutter 92 und 98 relativ zueinander bewegt, sodass eine Stauchung des Rohlings 96 erfolgt mit einer Materialanhäufung in dem Bereich der durch Ausnehmungen 102, 104 in den Backen 94, 100 vorgegeben ist. Dadurch bildet sich an dem Rohling 96 an dem umzuformenden Abschnitt, der wie in der Figur 8 punktiert angedeutet eine zylindrische Form aufweist, durch Materialanhäufung mittels Stauchen des Rohlings 96 einen Ringbund 106, wie dies ebenfalls aus Figur 8 ersichtlich ist.

Aus dieser Beschreibung wird deutlich, dass mit dem erfindungsgemäßen Verfahren und der erfindungsgemäßen Vorrichtung an einer beliebigen Stelle bei beliebig langen stabförmigen Bauteilen funktionelle Elemente angeformt werden können, ein Vorgang, der an einem Rohling 96 selbstverständlich auch mehrfach durchgeführt werden kann.

Die einzige Voraussetzung hierbei ist jeweils, dass für bereits geformte funktionelle Elemente die Backenfutter eine entsprechende Ausnehmung bereit stellen oder aber die Backenfutter in ihrer Axialausdehnung so bemessen sind, dass sie einen Kontakt mit bereits gebildeten funktionellen Elementen an dem Rohling/stabförmigen Bauteil vermeiden.

Ebenfalls ist selbstverständlich, wie dies bereits für die im Rahmen der Figur 7 gezeigte und beschriebene Vorrichtung gilt, dass die Backen des Fixierwerkzeuges und hier auch des Umformwerkzeuges soweit auseinander fahrbar sein müssen, dass das fertige Bauteil mit den angeformten funktionellen Elementen durch das Backenfutter hindurch der Vorrichtung entnommen werden kann. Entsprechend groß müssen dann die Bohrungen in der Basisplatte 62 bzw. der Montageplatte 80 (übertragen auf die Struktur in Figur 7) bemessen sein.

## Patentansprüche

1. Verfahren zur Herstellung von stabförmigen Bauteilen aus einem thermoplastischen Kunststoffmaterial, umfassend das Herstellen eines Rohlings im Extrusionsverfahren mit Abmessungen, die im Wesentlichen dem stabförmigen Bauteil entsprechen, und Umformen eines Abschnitts des Rohlings zum Erzeugen einer vorgegebenen Querschnittsänderung unter Materialanhäufung in diesem Abschnitt zum Bauteil mit funktionellem Element, wobei der Abschnitt vor oder beim Umformen auf eine Umformtemperatur erwärmt wird, welche zwischen dem Glasumwandlungspunkt und dem Schmelzpunkt oder Erweichungspunkt des Kunststoffmaterials liegt.

2. Verfahren nach Anspruch 1, **dadurch gekennzeichnet, dass** die Umformtemperatur um mindestens 20°C oberhalb der Glasumwandlungstemperatur liegt.

3. Verfahren nach Anspruch 2, **dadurch gekennzeichnet, dass** die Umformtemperatur um mindestens 35 bis 70°C oberhalb der Glasumwandlungstemperatur liegt.

4. Verfahren nach einem der Ansprüche 1 bis 3, **dadurch gekennzeichnet, dass** die Umformtemperatur um mindestens 100°C unterhalb der Schmelztemperatur liegt.

5. Verfahren nach einem der Ansprüche 1 bis 4, **dadurch gekennzeichnet, dass** der Rohling in einem Bereich benachbart zum umzuformenden Abschnitt in einem Werkzeug im wesentlichen formänderungsfrei fixiert wird, während der umzuformende Abschnitt der Umformung unterzogen wird.

6. Verfahren nach Anspruch 5, **dadurch gekennzeichnet, dass** die Umformung als Senkschritts erfolgt.

7. Verfahren nach Anspruch 6, **dadurch gekennzeichnet, dass** der Senkschritt eine Stauchung des Abschnitts parallel zur Längsrichtung des Rohlings umfasst.

8. Verfahren nach einem der Ansprüche 5 bis 7, **dadurch gekennzeichnet, dass** das Werkzeug zum Fixieren des Abschnitts ein Backenfutter umfasst.

9. Verfahren nach Anspruch 8, **dadurch gekennzeichnet, dass** das Werkzeug ein Drei-Backenfutter umfasst.

10. Verfahren nach Anspruch 8, **dadurch gekennzeichnet, dass** das Werkzeug ein Vierbackenfutter umfasst.

11. Verfahren nach einem der voranstehenden Ansprüche, **dadurch gekennzeichnet, dass** der umzuformende Abschnitt ein freies Ende des stabförmigen Rohlings umfasst.

12. Verfahren nach einem der Ansprüche 1 bis 11, **dadurch gekennzeichnet, dass** der umzuformende Abschnitt von beiden Enden des stabförmigen Rohlings beabstandet ist.

13. Verfahren nach einem der Ansprüche, **dadurch gekennzeichnet, dass** das Umformen mit einem formgebenden Werkzeug vorgenommen wird.

14. Verfahren nach Anspruch 13, **dadurch gekennzeichnet, dass** das formgebende Werkzeug ein Gesenk umfasst.

15. Verfahren nach Anspruch 13, **dadurch gekennzeichnet, dass** das formgebende Werkzeug zur Entformung teilbar ist.

16. Verfahren nach einem der Ansprüche 1 bis 15, **dadurch gekennzeichnet, dass** die Haltezeit in dem formgebenden Werkzeug mindestens 10 s beträgt.

17. Verfahren nach Anspruch 16, **dadurch gekennzeichnet, dass** die Haltezeit in dem formgebenden Werkzeug 30 s bis 5 min beträgt.

18. Verfahren nach Anspruch 16 oder 17, **dadurch gekennzeichnet, dass** der Abschnitt während in dem formgebenden Werkzeug auf die Umformtemperatur beheizt wird.

19. Verfahren nach Anspruch 18, **dadurch gekennzeichnet, dass** der Abschnitt während der Haltezeit auf der Umformtemperatur gehalten wird.

20. Verfahren nach Anspruch 18 oder 19, **dadurch gekennzeichnet, dass** das formgebende Werkzeug dauerhaft auf der Umformungstemperatur gehalten wird.

21. Verfahren nach einem der Ansprüche 18 bis 20, **dadurch gekennzeichnet, dass** ein zum Umformwerkzeug benachbarter Teil des Fixierwerkzeugs beheizt wird.

22. Verfahren nach einem der Ansprüche 1 bis 17, **dadurch gekennzeichnet, dass** der Rohling vor dem Einsetzen in das Umformwerkzeug auf die Umformtemperatur beheizt wird.

23. Verfahren nach Anspruch 22, **dadurch gekennzeichnet, dass** das Umformwerkzeug unbeheizt ist.

24. Verfahren nach einem der Ansprüche 1 bis 23, **dadurch gekennzeichnet, dass** das Vorfabrikat von einem endlos gefertigten stabförmigen Material in einem Konfektionierungsschritt erhalten wird.

25. Bauteil aus einem thermoplastischen Kunststoff, umfassend einen stabförmigen Grundkörper mit einem im Wesentlichen konstanten Querschnitt und mindestens einem im Querschnitt abweichenden Abschnitt.

26. Bauteil nach Anspruch 25, **dadurch gekennzeichnet, dass** der mindestens eine, im Querschnitt abweichende Abschnitt an einem freien Ende des Bauteils angeordnet ist.

27. Bauteil nach Anspruch 25, **dadurch gekennzeichnet, dass** der mindestens eine, im Querschnitt abweichende Abschnitt von beiden freien Enden des Bauteils beabstandet angeordnet ist.

28. Bauteil nach einem der Ansprüche 25 bis 27, **dadurch gekennzeichnet, dass** der im Querschnitt abweichende Abschnitt eine Kugelkalottenform aufweist.

29. Bauteil nach einem der Ansprüche 25 bis 27, **dadurch gekennzeichnet, dass** in Querschnitt abweichende Abschnitt eine Polygonalform aufweist.

30. Bauteil nach Anspruch einem der Ansprüche 25 bis 27, **dadurch gekennzeichnet, dass** der im Querschnitt abweichende Abschnitt die Form eines Ringbundes auf weist.

31. Bauteil nach einem der Ansprüche 25 bis 27, **dadurch gekennzeichnet, dass** der im Querschnitt abweichende Abschnitt an seinem Außenumfang einen oder mehrere radial abstehende Vorsprünge aufweist.

32. Vorrichtung zur Durchführung des Verfahrens gemäß einem der Ansprüche 1 bis 24, **dadurch gekennzeichnet, dass** die Vorrichtung ein Werkzeug zum Fixieren eines stabförmigen Rohlings und ein Umformwerkzeug umfasst, wobei das Umformwerkzeug und das Fixierwerkzeug in der Vorrichtung zueinander in Axialrichtung des Rohlings relativ verschieblich gehalten sind.

33. Vorrichtung nach Anspruch 32, **dadurch gekennzeichnet, dass** das Fixierwerkzeug eine Zentriervorrichtung zum Zentrieren des Rohlings in der Vorrichtung umfasst.

34. Vorrichtung nach Anspruch 33, **dadurch gekennzeichnet, dass** das Fixierwerkzeug ein Drei- oder ein Vier-Backenfutter umfasst.

35. Vorrichtung nach Anspruch 34, **dadurch gekennzeichnet, dass** die Backen in Axialrichtung des Rohlings geteilt sind, wobei ein dem Umformwerkzeug zugewandte Teil des Backenfutters vorzugsweise beheizbar ausgebildet ist.

36. Vorrichtung nach einem der Ansprüche 32 bis 35, **dadurch gekennzeichnet, dass** die Vorrichtung eine Führung für das Umformwerkzeugs umfasst, insbesondere in Form eines Hohlzylinders.

37. Vorrichtung nach Anspruch 36, **dadurch gekennzeichnet, dass** die Führung für das Umformwerkzeug Führungselemente umfasst, die mit dem Fixierwerkzeug zusammenwirken, derart, dass eine Zentrierung der Führung des Umformwerkzeugs bezüglich der Symmetrie der Achse des Fixierwerkzeugs resultiert.

38. Verwendung eines Bauteils gemäß einem der Ansprüche 25 bis 31 als Gelenkbolzen.

39. Verwendung nach Anspruch 38, **dadurch gekennzeichnet, dass** der Gelenkbolzen zur Verbindung von einzelnen Gliedern eines Kettenbandes dient.

40. Verwendung nach Anspruch 39, **dadurch gekennzeichnet, dass** das Kettenband ein Kettenband zum Einsatz in der industriellen Fertigung und/oder Verarbeitung von Lebensmitteln ist.
